(19) Europäisches Patentamt / European Patent Office / Office européen des brevets

(11) **EP 4 156 796 A1**

(12) **EUROPEAN PATENT APPLICATION**
published in accordance with Art. 153(4) EPC

(43) Date of publication:
**29.03.2023 Bulletin 2023/13**

(21) Application number: **20941460.6**

(22) Date of filing: **19.06.2020**

(51) International Patent Classification (IPC):
*H04W 52/02* (2009.01)    *H04W 72/04* (2009.01)

(52) Cooperative Patent Classification (CPC):
**H04W 52/02; H04W 72/04; Y02D 30/70**

(86) International application number:
**PCT/CN2020/097135**

(87) International publication number:
**WO 2021/253412 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **LI, Haitao**
**Dongguan, Guangdong 523860 (CN)**
• **HU, Yi**
**Dongguan, Guangdong 523860 (CN)**

(74) Representative: **RGTH**
**Patentanwälte PartGmbB**
**Neuer Wall 10**
**20354 Hamburg (DE)**

(54) **WIRELESS COMMUNICATION METHOD AND TERMINAL DEVICE**

(57)    A wireless communication method and a UE, which are beneficial for both the response of a receiving network and the power saving of a terminal. The method comprises: a LTE sending first information to a network device; the UE receiving first indication information sent by the network device, wherein the first indication information is used for indicating that the UE skips physical downlink control channel (PDCCH) monitoring; and the UE determining, according to a first duration and a first round-trip time (RTT), whether to skip PDCCH monitoring, wherein the first duration is a duration in which the UE skips PDCCH monitoring, and the first RTT is an RTT of signal transmission between the UE and the network device.

**FIG. 3**

**Description**

TECHNICAL FIELD

Embodiments of the disclosure relate to the technical filed of communication, in particular to a method for wireless communication and a user equipment.

BACKGROUND

For the purpose of saving power for user equipments (LTEs), a concept of Discontinuous Reception (DRX) is proposed. Specifically, the network device can configure the UE to wake up at a time (i.e. DRX ON) predicted by the network to monitor one or more Physical Downlink Control Channels (PDCCHs). The network device can also configure the UE to sleep at a time (i.e. DRX OFF) predicted by the network, that is, the UE does not monitor the PDCCH(s).

In Release-17 (Rel-17) of the 3rd Generation Partnership Project (3GPP), the power saving scheme for a connected UE that is configured with DRX is further studied. One mode is to introduce PDCCH skipping mechanism, that is, the network can indicate the UE to skip PDCCH monitoring for a period of time by sending dynamic signaling. The UE configured with DRX can monitor the PDCCH(s) during DRX active time. When the UE receives PDCCH skipping indication from the network device, the UE should follow the PDCCH skipping indication and skip the PDCCH monitoring during the subsequent PDCCH skipping duration, even if the UE is at the DRX active time during this PDCCH skipping duration.

However, in some scenarios, the UE can trigger uplink transmission on its own and expect further response from the network device. For example, the UE sends uplink information on a Configured Grant (CG) resource and expects the network device to respond. In this case, if receiving the PDCCH skipping indication from the network device, how the UE performs the PDCCH monitoring to give consideration to both receiving the response from the network and saving power for the UE is an urgent problem to be solved.

SUMMARY

Embodiments of the present disclosure provide a method for wireless communication and a UE. PDCCH monitoring can be performed according to Round Trip Time (RTT) between a UE and a network device, so as to give consideration to both receiving the response from the network and saving power for the UE.

According to a first aspect, a method for wireless communication is provided, which includes the following operations. A UE sends first information to a network device. The UE receives first indication information from the network device. Herein the first indication information is configured to indicate the UE to skip PDCCH monitoring. The UE determines whether to skip the PDCCH monitoring based on a first duration and a first RTT. Herein the first duration is a duration skipped by the UE for monitoring PDCCH, and the first RTT is a RTT for signal transmission between the UE and the network device.

According to a second aspect, a UE is provided, which is configured to perform the method in the first aspect or any possible embodiments of the first aspect. Specifically, the UE includes units for performing the method in the first aspect or any possible embodiments of the first aspect.

According to a third aspect, a UE is provided, which includes a processor and a memory. The memory is configured to store a computer program. The processor is configured to call and execute the computer program stored in the memory to perform the method in the first aspect or any possible embodiments of the first aspect.

According to a fourth aspect, a chip is provided, which is configured to implement the method in the first aspect or any possible embodiments of the first aspect.

Specifically, the chip includes a processor configured to call and execute a computer program from a memory, so as to enable a device installed with the chip to perform the method in the first aspect or any possible embodiments of the first aspect.

According to a fifth aspect, a computer-readable storage medium is provided, which is configured to store computer programs that enable a computer to perform the method in the first aspect or any possible embodiments of the first aspect.

According to a six aspect, computer program product is provided, which includes computer program instructions that enable a computer to perform the method in the first aspect or any possible embodiments of the first aspect.

According to a seventh aspect, a computer program is provided, which is configured to enable a computer to perform the method in the first aspect or any possible embodiments of the first aspect.

Based on the above technical scheme, after the UE triggers the uplink transmission, if receiving a PDCCH skipping indication from the network device, the UE can control the PDCCH monitoring according to the PDCCH skipping duration and the RTT for signal transmission between the UE and the network device, so as to give consideration to both receiving the response from the network and saving power for the UE.

BRIEF DESCRIPTION OF THE DRAWINGS

FIG. 1 is a diagram of an application scenario according to embodiments of the present disclosure.

FIG. 2 is a block diagram of a DRX according to an embodiment of the present disclosure.

FIG. 3 is a diagram of a method for wireless communication according to an embodiment of the present disclosure.

FIGS. 4-9 are several examples of PDCCH monitoring according to embodiments of the present disclosure.

FIG. 10 is a block diagram of a user equipment according to an embodiment of the present disclosure.

FIG. 11 is a block diagram of a communication device according to another embodiment of the present disclosure.

FIG. 12 is a block diagram of a chip according to an embodiment of the present disclosure.

DETAILED DESCRIPTION

The technical solutions in the embodiments of the present disclosure are described in the following with reference to the accompanying drawings in the embodiments of the present disclosure. It is obvious that the described embodiments are some rather than all of the embodiments of the disclosure. All other embodiments obtained by a person of ordinary skill in the art based on the embodiments of the disclosure without creative efforts shall fall within the protection scope of the disclosure.

The technical solutions of the embodiments of the disclosure may be applied to various communication systems, for example, a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Non-Terrestrial Networks (NTN) System, a Universal Mobile Telecommunications System (UMTS), a Wireless Local Area Network (WLAN), a Wireless Fidelity (WiFi), a 5th-Generation (5G) system or other communication systems.

In general, the number of connections supported by traditional communication systems is limited and easy to be implemented. However, with the development of communication technology, mobile communication systems will not only support conventional communication, but also support, for example, Device to Device (D2D) communication, Machine to Machine (M2M) communication, Machine Type Communication (MTC), Vehicle to Vehicle (V2V) communication, or Vehicle to Everything (V2X) communication, and the like. Embodiments of the present disclosure can also be applied to these communication systems.

Optionally, the communication systems in the embodiments of the present disclosure can be applied to a Carrier Aggregation (CA) scenario, a Dual Connectivity (DC) scenario, and a Standalone (SA) networking scenario.

Optionally, the communication system in the embodiments of the present disclosure can be applied to an unlicensed spectrum. Herein the unlicensed spectrum may also be considered a shared spectrum. Alternatively, the communication system in the embodiments of the present disclosure can also be applied to a licensed spectrum. Herein the licensed spectrum may also be considered as a non-shared spectrum.

Embodiments of the present disclosure are described in combination with a network device and a terminal. Herein the terminal can also be referred to as a UE, an access terminal, a user unit, a user station, a mobile station, a remote station, a remote terminal, a mobile device, a user terminal, a terminal, a wireless communication device, a user agent or a user device, and the like.

The UE may be a station (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a UE in a next next-generation communication system (e.g. NR network), or a UE in a future evolved Public Land Mobile Network (PLMN), and the like.

In the embodiments of the present disclosure, the UE may be deployed on the land which can be indoor or outdoor, handheld, wearable, or vehicle-mounted. The UE can also be deployed on the water (e.g. deployed in a ship, etc.). The UE can also be deployed in the air (e.g. deployed in an airplane, a balloon, a satellite, etc.).

In the embodiments of the present disclosure, the UE can be a mobile phone, a pad, a computer with wireless transceiver function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in smart city or a wireless terminal in smart home, and the like.

As an example rather than a limitation, in the embodiments of the present disclosure, the UE may also be a wearable device. The wearable device can also be referred to as a wearable smart device, which is a general name of wearable devices developed by applying wearable technology to intelligently design daily wear, such as glasses, gloves, watches, clothes and shoes. The wearable device is a portable device that is worn directly on the body or integrated into the user's clothes or accessories. The wearable device is not only a kind of hardware device, but also realizes powerful functions through software support, data interaction and cloud interaction. In a broad sense, the wearable smart device may include devices (e.g. smart watches or smart glasses) that have various functions and a large size, and can realize complete or partial functions without relying on smart phones, and devices (e.g. various smart bracelets and smart jewelries for physical sign monitoring) that are only focus on certain functions, and need to cooperate with other devices such as smart phones.

In the embodiments of that present disclosure, the network device may be a device for communicating with a mobile device, an Access Point (AP) in the WLAN, a Base Transceiver Station (BTS) in the GSM or CDMA, a NodeB (NB) in the WCDMA, an Evolved Node B (eNB or eNodeB) in the LTE, a relay station or an AP, a vehicle-mounted device, a wearable device, a network device in the NR network (gNB), a network device in a future evolved PLMN, or a network device in the NTN, and the like.

As an example rather than a limitation, in embodiments of the present disclosure, the network device may have movable characteristics, for example, the network device can be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, and the like. Alternatively, the network device may also be a base station set on land, in a water area and the like.

In order to ensure the satellite coverage and improve system capacity of the entire satellite communication system, the satellite can optionally use multiple beams to cover the ground. A satellite can have dozens or even hundreds of beams to cover the ground, and a satellite beam can cover the ground area with a diameter of tens to hundreds of kilometers

In the embodiment of that present disclosure, the network device can provide service for a cell, and the UE communicates with the network device through transmission resources (e.g. frequency domain resources, or spectrum resources) used by the cell. The cell may be corresponding to the network device (e.g. base station). The cell can belong to a macro site or a base station corresponding to a small cell. Herein the small cell may include a metro cell, a micro cell, a pico cell, a femto cell, and the like. The small cell has characteristics of small coverage and low transmission power, and is suitable for providing high-speed data transmission service.

An important characteristic of uplink transmission is that different UEs have orthogonal multiple access in time-frequency domain. That is, the uplink transmission of different UEs from the same cell does not interfere with each other.

In order to ensure the orthogonality of the uplink transmission and avoid intra-cell interference, the network requires that the arrival times of signals sent at the same time by different UEs with different frequency domain resources to the network are basically aligned. In order to ensure time synchronization on the network side, the NR supports the uplink Time Advance (TA) mechanism.

Specifically, uplink clock and downlink clock on the network side are the same. However, there is an offset between uplink clock and downlink clock on the UE side, and uplink TAs corresponding to different UEs are different. By appropriately controlling the offset of each LTE, the network can control the arrival time of uplink signals from different UEs to the network. In this way, a UE far from the network needs to send uplink data ahead of a UE near the network because of a large transmission delay.

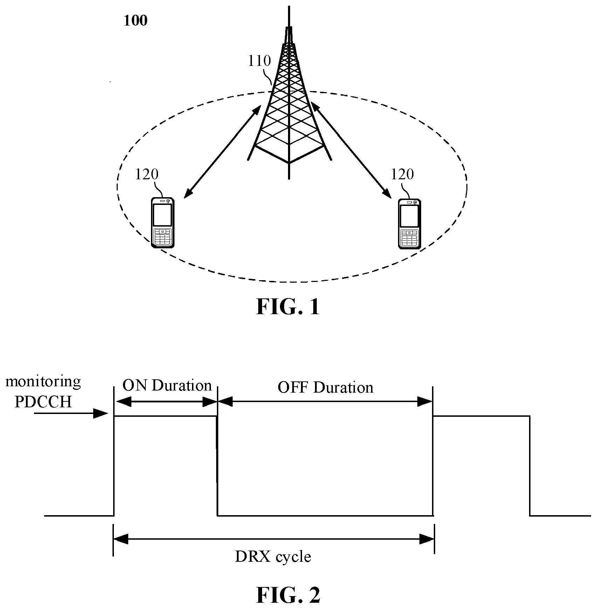

Exemplarily, communication system 100 to which embodiments of the present disclosure are applied is illustrated in FIG. 1. The communication system 100 may include a network device 110 which may be a device that communicates with a UE 120 (also referred to as a communication terminal or a terminal). The network device 110 can provide communication coverage for a specific geographic area and can communicate with UEs located within the coverage area.

FIG. 1 exemplarily illustrates one network device and two UEs. Optionally, the communication system 100 may include multiple network devices, and there may be other numbers of LTEs within the coverage area of each network device, which is not limited in the embodiments of the present disclosure.

Optionally, the communication system 100 can also include other network controllers, mobile management entities and other network entities, which are not limited in the embodiments of the present disclosure.

It should be understood that a device having a communication function in networks or the systems in the embodiments of the present disclosure can be referred to as a communication device. Taking the communication system 100 shown in the FIG. 1 as an example, the communication device may include the network device 110 and the UE 120 that have the communication function. The network device 110 and the UE 120 can be the specific devices described above, and will not be described here. The communication devices can also include other devices in the communication system 100, such as the network controllers, the mobile management entities and the other network entities, which are not limited in the embodiments of the present disclosure.

It should be understood that the terms "system" and "network" are often used interchangeably herein. The term "and/or" herein is merely an association relationship that describes associated objects, which can indicate that there can three kinds of relationships. For example, the expression "A and/or B" can indicate the following three cases. A exists alone; A and B exist at the same time, and B exists alone. In addition, the character "/" herein generally indicates that the related objects have the relationship of "or".

It should be understood that the expression "indicate" mentioned in the embodiments of the present disclosure may be a direct indication or an indirect indication, or may indicate that there is an association relationship. For example, A indicates B, which can indicate that A indicates B directly (e.g. B can be obtained through A), or can indicate that A indicates B indirectly (e.g. A indicates C, and B can be obtained through C), or can indicate that there is an association relationship between A and B.

In the description of the embodiments of the present disclosure, the term "correspondence" may indicate that there is a direct correspondence relationship or an indirect correspondence relationship between the two, or may indicate that there is an association relationship between the two, or may indicate that there is a relationship of indicating and being indicated, configuring and being configured, and the like.

For purpose of saving power for the UEs, a concept of DRX is proposed. Specifically, the network device can configure the UE to wake up at a time (i.e. DRX ON) predicted by the network to monitor PDCCH(s). The network device can also configure the UE to sleep at a time (i.e. DRX OFF) predicted by the network; in other words, the UE does not monitor the PDCCH(s). Thus, if the network device 120 has data to transmit to the UE 110, the network device 120 can schedule the UE 110 during the DRX ON of the UE 110. During the DRX OFF period, power consumption of the UE can be reduced due to turning off of radio frequency.

As illustrated in FIG. 2, a DRX cycle configured by the network device for the UE consists of On Duration and Opportunity for DRX. In an RRC CONNECTED mode, if the UE is configured with the function of DRX, the UE monitors and receives the PDCCH(s) during the On Duration. The UE does not monitor the PDCCH(s) during the Opportunity for DRX to reduce the power consumption.

It should be understood that the UE does not receive the PDCCH(s) during the Opportunity for DRX in the embodiments of the present disclosure, but can receive data from other physical channels, which is not specifically limited in the embodiments of the present disclosure. For example, the UE can receive a Physical Downlink Shared Channel (PDSCH), an Acknowledgement/Non Acknowledgement (ACK/NACK), and the like. For another example, in Semi-Persistent Scheduling (SPS), the UE may receive PDSCH data configured periodically.

In some embodiments, a Media Access Control (MAC) entity can be configured with the DRX function through Radio Resource Control (RRC) for controlling behaviour of the PDCCH monitoring of the UE. That is, each MAC entity corresponds to a respective DRX configuration. Optionally, the DRX configuration includes at least one of the following: DRX on duration timer (drx-onDurationTimer): a duration of the DRX ON of the UE from the beginning of the DRX cycle.

DRX slot offset (drx-SlotOffset): a delay for the UE to start the drx-onDurationTimer.

DRX inactivity timer (drx-InactivityTimer): a duration for which the UE continues the PDCCH monitoring after the UE receives a PDCCH indicating initial uplink transmission or initial downlink transmission.

Drx downlink retransmission timer (drx-RetransmissionTimerDL): a maximum duration for which the LTE monitors a PDCCH indicating downlink retransmission scheduling. Each downlink Hybrid Automatic Repeat Request (HARQ) process except the broadcast HARQ process corresponds to a respective drx-RetransmissionTimerDL.

Drx uplink retransmission timer (drx-RetransmissionTimerUL): a maximum duration for which the UE monitors a PDCCH indicating uplink retransmission scheduling. Each uplink HARQ process corresponds to a respective drx-RetransmissionTimerUL.

Long DRX cycle start offset (drx-LongCycleStartOffset): configured to configure a long DRX cycle, as well as an offset of a subframe at the beginning of the long DRX cycle and short DRX cycle.

Short DRX cycle (drx- ShortCycle): short DRX cycle, which is an optional configuration.

Short cycle timer (drx-ShortCycleTimer): a duration for which the LTE is in the short DRX cycle (and does not receive any PDCCH), which is an optional configuration.

DRX downlink HARQ RTT timer (drx-HARQ-RTT-TimerDL): a minimum waiting time required that the UE expects to receive a PDCCH indicating downlink scheduling. Each downlink HARQ process except the broadcast HARQ process corresponds to a respective drx-HARQ-RTT-TimerDL.

DRX uplink HARQ RTT timer (drx-HARQ-RTT-TimerUL): a minimum waiting time required that the UE expects to receive a PDCCH indicating uplink scheduling. Each uplink HARQ process corresponds to a respective drx-HARQ-RTT-TimerUL.

If the UE is configured with the DRX, the UE needs to monitor the PDCCH during the DRX active time. The DRX active time may include the following scenarios.

Scenario 1: any one of the drx-onDurationTimer, the drx-InactivityTimer, the drx-RetransmissionTimerDL, the drx-RetransmissionTimerUL and a random access contention resolution timer (ra-ContentionResolutionTimer) is running.

Scenario 2: the UE sends a scheduling request (SR) and is in a pending state.

Scenario 3: in a contention-based random access procedure, the UE does not receive an initial transmission indicated by a PDCCH that is scrambled by a Cell Radio Network Temporary Identifier (C-RNTI) after successfully receiving a random access response.

In some embodiments, if the drx-InactivityTimer expires and/or the UE receives a DRX Command Media Access Control Command Control Element (DRX Command MAC CE), the UE uses the long DRX cycle.

In some embodiments, if the drx-ShortCycleTimer expires and/or the UE receives a long DRX command MAC CE, the UE uses the short DRX cycle.

In some embodiments, the UE may decide when to start the drx-onDurationTimer according to whether the UE currently uses the long DRX cycle or the short DRX cycle.

For example, if the UE uses the short DRX cycle, the current subframe satisfies

$$[(SFN \times 10) + \text{subframe number}] \text{ modulo } (\text{drx-ShortCycle}) = (\text{drx-StartOffset}) \text{ modulo } (\text{drx-ShortCycle}).$$

For another example, if the UE uses the long DRX cycle, the current subframe

$$\text{satisfies } [(SFN \times 10) + \text{subframe number}] \text{ modulo } (\text{drx-LongCycle}) = \text{drx-StartOffset}.$$

Herein the operator "modulo" represents a modulo operation.

In some embodiments, the UE may start the drx-onDurationTimer at a time after drx-SlotOffset slots from the beginning of the current subframe.

In some embodiments, conditions for starting or restarting the drx-InactivityTimer include but are not limited to the following:

if the UE receives a PDCCH indicating the initial downlink transmission or the initial uplink transmission, the UE starts or restarts the drx-InactivityTimer.

In some embodiments, conditions for starting and stopping the drx-RetransmissionTimerDL include but are not limited to the following:

when the UE receives a PDCCH indicating downlink transmission, or when the UE receives a MAC Protocol Data Unit (PDU) on a configured downlink grant, the UE stops the drx-RetransmissionTimerDL corresponding to the HARQ process. After completing transmission of HARQ process feedback for the downlink transmission, the UE can start the drx-HARQ-RTT-TimerDL corresponding to the HARQ process.

If the drx-HARQ-RTT-TimerDL corresponding to a certain HARQ process of the UE expires, and decoding of downlink data transmitted by the HARQ process fails, the UE starts the drx-RetransmissionTimerDL corresponding to the HARQ process.

In some embodiments, conditions for starting and stopping the drx-RetransmissionTimerUL include but are not limited to the following:

when the UE receives a PDCCH indicating uplink transmission, or when the UE sends a MAC PDU on a configured uplink grant, the UE stops the drx-RetransmissionTimerUL corresponding to the HARQ process. The UE starts the drx-HARQ-RTT-TimerUL corresponding to the HARQ process after completing a first repetition of the transmission of the PUSCH.

If the drx-HARQ-RTT-TimerUL corresponding to a certain HARQ of the UE expires, the UE starts the drx-RetransmissionTimerUL corresponding to the HARQ process.

In 3GPP Rel-17, the power saving scheme for a connected UE that is configured with the DRX is further studied, which includes the scheme of reducing blind detection of the PDCCH(s) by the UE. One mode is to introduce the PDCCH skipping mechanism, that is, the network can indicate, through sending dynamic signaling, the UE to skip the PDCCH monitoring for a period of time.

The UE configured with the DRX can monitor the PDCCH(s) during the DRX active time. When the UE receives PDCCH skipping indication from the network device, the UE should follow the PDCCH skipping indication and skip the PDCCH monitoring during the subsequent PDCCH skipping duration, even if the UE is at the DRX active time during this PDCCH skipping duration.

Generally, the network device can control whether the UE skips the PDCCH monitoring based on downlink service requirements of the UE and uplink service requirements previously reported by the UE through Buffer Status Report (BSR). For example, in a case that the network considers that the UE has no requirements for the uplink and downlink data transmission in a future period of time, the network can indicate the UE to skip the PDCCH monitoring in this period of time, to achieve the purpose of saving power for the UE.

However, in some scenarios, the UE can trigger the uplink transmission on its own and expect further response from the network. For example, the uplink data from the UE is arrived without referencing uplink resources reported by the BSR, thereby triggering the SR, or the UE transmits the PUSCH by using a CG resource, or the UE triggers Beam Failure Recovery (BFR), etc. In this case, since the UE expects the response from the network, the UE has the demand for PDCCH monitoring. From the perspective of the network, the network can be aware of the scheduling demand of the UE only after receiving the uplink transmission of the UE, and the network is not aware of the scheduling demand of the UE before receiving the uplink transmission of the UE.

In some scenarios, such as an NTN scenario, if the network does not receive the uplink transmission from the UE when sending the PDCCH skipping indication, the network only considers the current downlink transmission demands. In this case, how the UE performs the PDCCH monitoring to give consideration to both receiving the response from the network and saving power for the UE is an urgent problem to be solved.

In view of this, the present disclosure provides a method for the PDCCH monitoring, so that the PDCCH monitoring can be performed according to the RTT between the UE and the network device and the PDCCH skipping duration, thereby giving consideration to both receiving the response from the network and saving power for the UE.

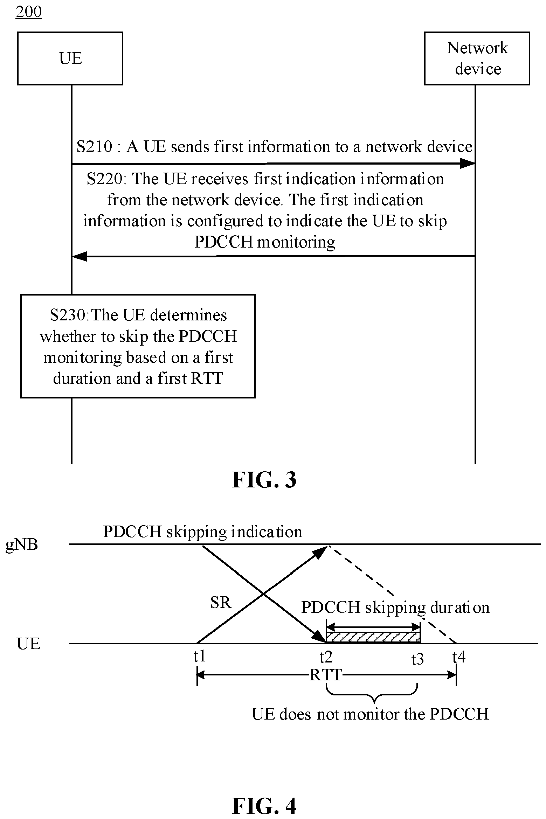

FIG. 3 is a diagram of a method 200 for wireless communication according to an embodiment of the present disclosure, which can be performed by the UE in the communication system illustrated in FIG. 1. As illustrated in FIG. 3, the method 200 includes at least some of the following operations.

At block S210, a UE sends first information to a network device.

At block S220, the UE receives first indication information from the network device. Herein the first indication information is configured to indicate the LTE to skip PDCCH monitoring.

At block S230, the UE determines whether to skip the PDCCH monitoring based on a first duration and a first RTT.

Optionally, the embodiments of the present disclosure may be applied to an NTN system, or may be applied to other networks or systems employing the DRX and the PDCCH skipping mechanism, which is not limited in the present disclosure.

Optionally, the first information may be an uplink transmission triggered by the UE. In other words, the first information is not an uplink transmission scheduled by the network device, and the network device is not aware of the uplink transmission triggered by the UE. After sending the first information, the UE may receive first indication information from the network device, which may also be referred to as a PDCCH skipping indication and is configured to indicate the LTE to skip the PDCCH monitoring.

In some embodiments, the UE monitors the PDCCH(s) for at least acquiring response information of the first information.

In Embodiment one, the first information includes a SR, and the SR is in a pending state when the first indication information is received. That is, the UE is in a state of waiting for a response to the SR from the network. In the Embodiment one, the UE, after sending the SR, expects the network device to respond and allocate uplink resources for uplink transmission.

In Embodiment two, the first information includes uplink information in a random access procedure. Alternatively, the random access procedure is triggered by BFR. Alternatively, the random access procedure may be triggered by other reasons, such as SR failure, etc., which is not limited in the present disclosure. In the Embodiment two, the UE, after sending the uplink information for the random access, expects the response from the network device to perform the random access.

Optionally, in the Embodiment two, the BFR may be a BFR on a Primary Cell (PCell) of the UE, or a BFR on a Primary Secondary cell (PSCell) of the UE, or other BFRs that may trigger the random access, which is not limited in the present disclosure.

In Embodiment three, the first information includes information sent on a CG resource, and the uplink transmission is configured to require feedback from the network. For example, the HARQ process corresponding to the CG resource is configured to activate HARQ feedback, or the HARQ feedback of the HARQ process corresponding to the CG resource is not cancelled. In the Embodiment three, the UE, after sending the uplink information on the CG resource, expects the feedback from the network device to determine whether to perform the retransmission.

Optionally, the first information may also include uplink information transmitted on other semi-static or static resources, which is not limited in the present disclosure.

It should be understood that the scenarios of the first information are described above for an exemplary purpose. In other embodiments, the first information may also be other uplink transmissions initiated by the LTE on its own or the uplink transmissions that cannot be predicted by the network device. Hereinafter, the above three embodiments will be described as examples, but the embodiments of the present disclosure is not limited thereto.

Since the network device is not aware of the uplink transmission triggered by the UE after the UE sends the first information, the network device may send first indication information to the UE to indicate the UE to skip the PDCCH monitoring. Optionally, the first indication information can be configured to indicate a first duration and/or a set of target serving cells in which skipping of the PDCCH monitoring is performed. Herein the first duration is a duration skipped by the UE for monitoring the PDCCH, which can also be referred to as a PDCCH skipping duration. That is, the network device configures the UE to skip the PDCCH monitoring during the first duration after receiving the first indication information.

Alternatively, in some other embodiments, the first duration may also be pre-configured or pre-defined, which is not limited in the present disclosure.

In some embodiments of the present disclosure, the UE can perform control of the PDCCH monitoring according to the first duration and the first RTT. Alternatively, the first RTT can be determined based on a transmission delay between the network device and the UE. For example, the first RTT can be determined according to a RTT for signal transmission between the UE and the network device.

In an embodiment, the first RTT is determined according to position information and ephemeris information the UE.

In another embodiment, the first RTT is determined according to a Timing Advance (TA) indicated by the network device. For example the first RTT can be a TA corresponding to the UE.

In yet another embodiment, the first RTT is determined according to a duration of the drx-HARQ-RTT-TimerUL configured by the network device. For example, the first RTT can be a duration of the drx-HARQ-RTT-TimerUL.

In still another embodiment, the first RTT is determined according to the duration and an RTT offset of the drx-HARQ-RTT-TimerUL configured by the network device. Herein the RTT offset can be an offset relative to the duration of the drx-HARQ-RTT-TimerUL. In other words, the duration of the drx-HARQ-RTT-TimerUL can be understood as a reference duration, or a standard duration. For example, the first RTT can be a sum of the duration and the RTT offset of the drx-HARQ-RTT-TimerUL.

Optionally, each of the different UEs may correspond to a respective RTT offset.

For convenience of description and explanation, the time when the UE sends the first information is recorded as a first time (or time t1). The time when the UE receives the first indication information is recorded as a second time (or time t2). The duration between the second time and a third time (or time t3) after the first time is the first duration. That is, the PDCCH skipping duration is between the second time and the third time. The duration between the first time and a fourth time (or time t4) is the first RTT. That is, the RTT between the UE and the network device is between the first time and the fourth time.

Optionally, the third time may be after the fourth time, or the fourth time may be after the third time, or the third time and the fourth time are the same time.

In some embodiments of the present disclosure, the PDCCH monitoring is performed by the UE as follows.

During the first duration after receiving the first indication information and during the first RTT after sending the first information, the UE skips the PDCCH monitoring. Due to the transmission delay between the UE and the network device, during the first RTT after sending the first information, it can be considered that the response from the network device cannot reach the UE. In this case, the UE can follow the indication of the first indication information and skip the PDCCH monitoring, which is beneficial to save power for the UE.

After the first RTT which is after sending the first information (i.e. after the fourth time), the UE monitors the PDCCH(s). After the first RTT which is after sending the first information, it can be considered that the response from the network device can reach the UE. In this case, the UE ignores the indication of the first indication information and monitors the PDCCH(s), which is beneficial to receive the response from the network device in time.

It should be understood that, in the embodiments of the present disclosure, the operation of skipping the PDCCH monitoring performed by the UE can be directed to all serving cells, or directed to serving cells in a set of target serving cells indicated by the first indication information. Similarly, the operation of monitoring the PDCCH performed by the UE can be directed to all the serving cells, or directed to serving cells other than the set of target serving cells indicated by the first indication information.

It should be noted that, in the embodiments of the present disclosure, the expressions "the UE skips monitoring the PDCCH(s)", "the UE does not monitor the PDCCH(s)", "the UE stops monitoring the PDCCH(s)" and "the UE follows the indication of the first indication information" can be used interchangeably. Similarly, the expressions "the UE does not skip the PDCCH monitoring", "the UE continues the PDCCH monitoring", "the UE monitors the PDCCH(s)" and "the UE ignores the indication of the first indication information" can be used interchangeably. The present disclosure is not limited thereto.

It should also be noted that whether to monitor PDCCH(s) in other time periods other than the above time periods can be determined according to factors such as indications from the network, DRX configuration, as well as whether the UE has a scheduling demand, which is not limited in the present disclosure.

The following describes the specific implementation of the PDCCH monitoring in combination with the specific scenarios in the Embodiments one to three.

Embodiment one

In the Embodiment one, the UE may send the SR through a PUCCH, and the SR is in a pending state.

In the Embodiment one, the UE may receive a DRX configuration from the network device. Alternatively, the DRX configuration can be configured through RRC. The DRX configuration herein may include at least one of the DRX configurations described above, for example, the long DRX cycle, the drx-onDurationTimer, the drx-InactivityTimer, and the like.

The network device may also send relevant configuration of the logical channel, relevant configuration of the SR, etc. through the RRC.

For example, for each uplink logical channel of the UE, the network device can determine whether to configure a PUCCH resource for SR transmission for the uplink logical channel. If the network device determines to configure a PUCCH resource for the SR transmission for the uplink logical channel, as an example, the network device can configure 0 or 1 PUCCH resource for the SR transmission for the uplink logical channel on each uplink Band Width Part (BWP) of each serving cell for the UE, which is however not limited in the present disclosure.

At a certain time, a first uplink logical channel of the UE triggers the UE to send the SR on a PUCCH in the serving cell, and the SR is in the pending state. Optionally, there may be one or more first uplink logical channels.

The UE receives a PDCCH skipping indication from the serving cell, which may include the PDCCH skipping duration and/or the set of target serving cells in which the PDCCH skipping is performed. The UE may perform the following PDCCH monitoring operations for all the serving cells or for the serving cells in the set of target serving cells.

1. During the PDCCH skipping duration after receiving the PDCCH skipping indication and during the RTT after sending the SR, the UE stops monitoring the PDCCHs in the serving cells.

2. After receiving the PDCCH skipping indication and after the RTT which is after sending the SR, the UE ignores the PDCCH skipping indication and starts to monitor the PDCCHs in the serving cells.

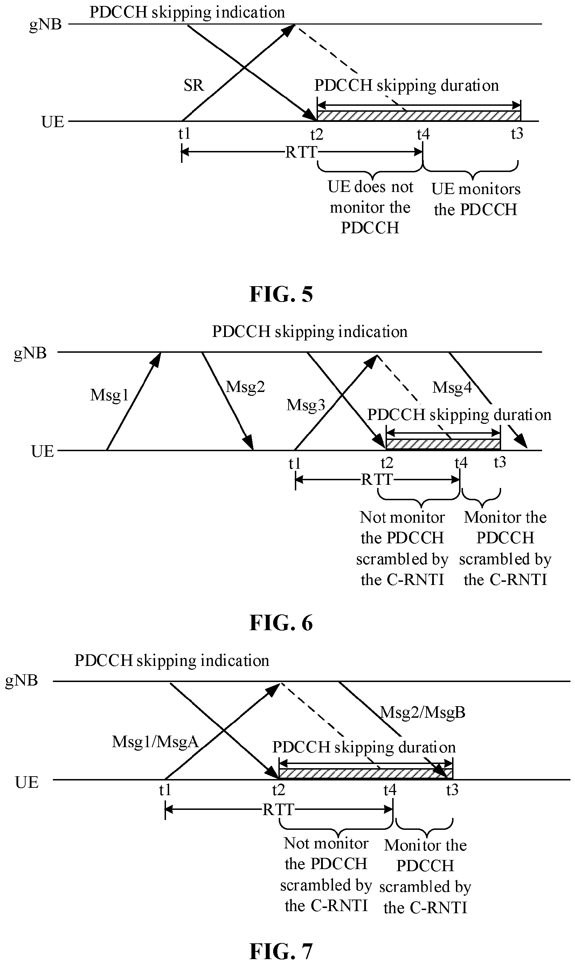

Description is made with reference to examples shown in FIG. 4 and FIG. 5.

As illustrated in FIG. 4, the UE sends the SR at the time t1, and receives the PDCCH skipping indication from the network device at the time T2. In FIG. 4, the PDCCH skipping duration is the period between the time t2 and the time t3, and the RTT is the period between the time t1 and the time t4. Herein the time t4 is later than the time t3. In this case, the UE may not perform the PDCCH monitoring during the PDCCH skipping duration (i.e. during the period between the time t2 and the time t3), and monitor the PDCCH after the time t4.

Optionally, the PDCCH(s) may or may not be monitored during the period between the time t3 and the time t4.

For example, the UE may determine whether to monitor the PDCCH(s) during this period according to factors such as the indication from the network, the DRX configuration, as well as whether the UE has the scheduling demand, and the like.

For example, if the UE has no other scheduling demands, the UE may not monitor the PDCCH(s). Alternatively, if this period is DRX OFF time of the UE, the UE may monitor the PDCCH(s).

As illustrated in FIG. 5 the UE sends the SR at the time t1 and receives the PDCCH skipping indication from the network device at the time t2. In the FIG. 5, the PDCCH skipping duration is the period between the time t2 and the time t3, and RTT is the period between the time t1 and the time t4. Herein the time t4 is earlier than the time t3. In this case, since the response from the network cannot arrive earlier than the time t4, the UE may not perform the PDCCH monitoring during the period between the time t2 and the time t4, and may monitor the PDCCH(s) after the time t4.

Therefore, after the UE sends the SR, if receiving the PDCCH skipping indication from the network device, the UE may control the PDCCH monitoring according to the PDCCH skipping duration and the RTT for the signal transmission between the UE and the network device, so as to give consideration to both receiving the SR response from the network and saving power for the UE.

Embodiment two

The first information includes uplink information in a random access procedure. Herein the random access procedure is triggered by BFR. In other words, the UE receives the PDCCH skipping indication from the network device during the BFR procedure.

In the Embodiment two, the UE may receive a DRX configuration from the network device. Optionally, the DRX configuration can be configured through the RRC. The DRX configuration herein may include at least one of the DRX configurations described above, for example, the long DRX cycle, the drx-onDurationTimer, the drx-InactivityTimer, and the like.

The network device may also send BFR configuration parameters through the RRC.

As an example rather than a limitation, the BFR configuration parameters may include at least one of the following:

Random Access Channel (RACH) resource configuration for the BFR.

A list of candidate Channel State Information Reference Signals (CSI-RSs) or Synchronization Signal Blocks (SSBs) (i.e. candidate BeamRSList).

A Layer-1 Reference Signal Received Power (L1-RSRP) threshold for beam selection by the UE, such as rsrp-ThresholdSSB and rsrp-ThresholdCSI-RS.

A beam failure recovery timer (i.e. beamFailureRecoveryTimer) used by the UE to control a maximum duration of a non-contention random access during the BFR procedure.

If the UE triggers the BFR, during the BFR process, the UE may determine a target reference signal (e.g. a CSI-RS or an SSB) from the candidateBeamRSList, and further initiate the random access on the corresponding RACH resource based on the target reference signal.

Several random access modes are described below. The UE supports two kinds of random access modes, that is, contention-based random access and the non-contention-based random access.

Scenario 1: contention-based 4-step random access.

Specifically, the contention-based 4-step random access includes the following steps.

In Step 1, the UE sends a random access preamble (i.e. Msg1) to the network device.

Herein, the random access preamble may also be referred to as a preamble, a preamble sequence, a random access preamble, a random access preamble sequence, and the like.

Specifically, the UE can select Physical Random Access Channel (PRACH) resources. Optionally, the PRACH resources may include time domain resources, frequency domain resources, code domain resources, and the like. The network device sends parameters related to random access, for example, a Reference Signal Receiving Power (RSRP) threshold (i.e. rsrp-ThresholdSSB), to the UE through a broadcast System Information Block Type 1(SIB1) for the UE to perform the SSB selection.

The UE may compare a RSRP measurement result on each SSB in the candidate SSB list with the rsrp-ThresholdSSB, and select the SSB of which the measurement result is higher than the configured threshold for access. If there is no SSB satisfying the configured threshold, an SSB is randomly selected from the candidate SSB list for access.

Optionally, in some embodiments, each SSB in the candidate SSB list corresponds to a set of random access preamble resources and RACH Occasion (RO) resources. The UE performs random selection from the contention-based random access resources of the selected SSB, and set a preamble index (PREAMBLE_INDEX) to the selected random access preamble. The network device may estimate the transmission delay between the network device and the UE according to the preamble, to calibrate the uplink timing accordingly, and roughly determine the resource size required by the UE to transmit the Msg 3.

In Step 2, the network device sends a Random Access Response (RAR, i.e. Msg2) to the UE.

After sending the preamble to the network device, the UE can activate a random access response window (ra-ResponseWindow), and monitors the corresponding PDCCH according to Random Access Radio Network Temporary Identifier (RA-RNTI) in the ra-ResponseWindow. If the UE monitors and receives the PDCCH scrambled by the RA-RNTI, the UE can obtain PDSCH scheduled by the PDCCH. The PDSCH includes an RAR corresponding to the preamble.

Optionally, the RA-RNTI is calculated according to a time-frequency position of a PRACH transmitting the preamble. Therefore, if multiple UEs send the preambles on the same RO, the corresponding RARs are multiplexed in a same RAR Media Access Control Protocol Data Unit (MAPDU).

If the UE successfully receives the PDCCH scrambled by the RA-RNTI corresponding to the RO resource for sending the preamble, and a Random Access Preamble Identifier (RAPID) carried by a MAC subPDU in the RAR corresponds to the PREAMBLE_INDEX selected in the Msg1, the RAR is received successfully, and decoding can be performed by the LTE to get a Timing Advance Command (TAC), an uplink Grant (UL Grant) and a Temporary Cell Radio Network Temporary Identity (TC-RNTI) for transmission of the Msg 3.

If the UE does not receive a PDCCH scrambled by the RA-RNTI corresponding to the RO resource for sending the preamble during operation of the ra-ResponseWindow, or the LTE receives a PDCCH scrambled by the RA-RNTI but the RAR does not contain the MAC subPDU corresponding to the PREAMBLE_INDEX, the RAR reception fails. At this time, if the transmission times of the preamble does not exceed a maximum transmission times (preambleTransMax) configured by the network, the LTE needs to retransmit the Msg1. If the transmission times of the preamble exceeds the maximum transmission times (preambleTransMax) configured by the network, the UE reports the random access problem to an upper layer.

In Step 3, the UE sends the Msg 3.

After receiving an RAR message, the UE determines whether the RAR is an RAR message for the UE itself. For example, the UE can check by using the PREAMBLE_INDEX. After determining that the RAR message is an RAR message for the UE itself, the UE can generate the Msg 3 on the RRC layer and send the Msg 3 to the network device, in which identification information of the UE is to be carried.

Here, the Msg 3 is mainly used to notify the network device of a random access triggering event. The Msg 3 sent by the UE in the Step 3 may include different contents for different random access triggering events.

For example, in an initial access scenario, the Msg 3 may include an RRC Setup Request generated by the RRC layer. In addition, Msg 3 can also carry, for example, a 5G Serving -Temporary Mobile Subscriber Identity (S-TMSI) or a random number of the UE.

For another example, for an RRC connection reestabilshment scenario, the Msg 3 may include an RRC Reestabilshment Request generated by the RRC layer. In addition, the Msg 3 may further carry, for example, a Cell Radio Network Temporary Identifier (C-RNTI) and the like.

For another example, in a handover scenario, the Msg 3 may include an RRC Handover Confirm generated by the RRC layer that carries the C-RNTI of the UE. In addition, the Msg 3 can further carry information such as BSR. For other triggering events, such as scenarios where uplink/downlink data arrives, the Msg 3 may include at least a C-RNTI of the UE.

In Step 4, the network device sends a contention resolution message (i.e. Msg 4) to the UE.

After sending the Msg 3, the UE can activate a ra-ContentionResolutionTimer and receive the Msg 4 from the network device during operation of the ra-ContentionResolutionTimer. If the Msg 4 is correctly received by the UE correctly, the contention resolution is completed.

Since the UE in the Step 3 can carry its own unique identifier in the Msg 3, in the contention resolution mechanism, the network device may carry the unique identifier of the UE in the Msg 4 to designate the UE winning in the contention. While other UEs that do not win in the contention resolution may re-initiate a random access.

For example, for the UE carrying the C-RNTI in the Msg 3, and the UE monitors the PDCCH scrambled by the C-RNTI, the contention is resolved.

Scenario 2: contention-based 2-step random access.

Compared with the contention-based 4-step random access procedure, the contention-based 2-step random access can improve the delay and reduce the signaling overhead. The contention-based 2-step random access may include the following steps.

In Step 1, the US sends MsgA to the network, and the MsgA transmits the Msg1+Msg 3 in the contention-based 4-step random access.

In Step 2, the network sends MsgB to the UE, and the MsgB transmits the Msg2+Msg 4 in the contention-based 4-step random access. After sending the MsgA, the UE activates a reception window for the MsgB so as to monitor and receive the MsgB in the window. Specifically, the PDCCH scrambled by the MSGB-RNTI and the PDCCH scrambled by the C-RNTI are monitored in the reception window.

Scenario 3: non-contention-based 4-step random access.

The non-contention-based 4-step random access is similar to the first two steps in the contention-based 4-step random access. The difference is that the preamble sequence sent by the LTE in the Step 1 is a dedicated preamble sequence, so that the network device can identify the UE when receiving the dedicated preamble sequence. Therefore, the access process can be completed without the subsequent Step 3 and Step 4.

It should be understood that the above random access scenarios are described by way of example only and that the present disclosure is also applicable to other random access scenarios and is not limited thereto.

The concrete implementations of the PDCCH monitoring according to the embodiments of the present disclosure can be described blow with reference to the above three random access scenarios.

Scenario 1: contention-based 4-step random access.

In the Scenario 1, the network device can identify the UE after receiving the Msg 3 from the UE and give a corresponding response. After sending the Msg 3, the UE can activate the ra-ContentionResolutionTimer and monitors the PDCCH scrambled by the C-RNTI during the operation of the ra-ContentionResolutionTimer.

During this period, if the UE receives the PDCCH skipping indication from the network device, the UE can perform the following PDCCH monitoring operations.

1. During the PDCCH skipping duration after receiving the PDCCH skipping indication and during the RTT after sending the Msg 3, the UE stops monitoring the PDCCH scrambled by the C-RNTI and the PDCCH scrambled by the TC-RNTI.

2. After receiving the PDCCH skipping indication and after the RTT after sending the Msg 3, the UE ignores the PDCCH skipping indication and starts to monitor the PDCCH scrambled by the C-RNTI and the PDCCH scrambled by the TC-RNTI.

As illustrated in FIG. 6, the UE sends the Msg 3 at the time t1, and receives the PDCCH skipping indication from the network device at the time t2. In the example of FIG. 6, the PDCCH skipping duration is the period between the time t2 and the time t3, and the RTT is the period between the time t1 and the time t4. Herein the time t4 is earlier than the time t3. In this case, since the response from the network cannot arrive earlier than the time t4, the UE may not monitor the PDCCH scrambled by the C-RNTI during the period between the time t2 and the time t4, and may monitor the PDCCH scrambled by the C-RNTI after the time t4.

Scenario 2: contention-based 2-step random access.

In the Scenario 2, the network device can identify the UE after receiving the MsgA from the UE and give the corresponding response. After sending the MsgA, the UE can activate a window for MsgB (MsgB-ResponseWindow) and receive the MsgB in the MsgB-ResponseWindow. Specifically, the UE monitors the PDCCH scrambled by the C-RNTI and the PDCCH scrambled by the MSGB-RNTI.

During this period, if the UE receives the PDCCH skipping indication from the network device, the UE may perform the following PDCCH monitoring operations.

1. During the PDCCH skipping duration after receiving the PDCCH skipping indication and during the RTT after sending the MsgA, the UE stops monitoring the PDCCH scrambled by the C-RNTI and the PDCCH scrambled by the MSGB-RNTI.

2. After receiving the PDCCH skipping indication and after the RTT which is after sending the MsgA, the UE ignores the PDCCH skipping indication and starts to monitor the PDCCH scrambled by the C-RNTI and the PDCCH scrambled by the MSGB-RNTI.

Scenario 3: non-contention-based 4-step random access.

In the Scenario 3, the network device can identify the UE after receiving the Msg1 from the UE and give the corresponding response. Specifically, after sending the Msg1, the UE may activate an RAR window and receive the RAR in the RAR window. Specifically, the UE monitors the PDCCH scrambled by the C-RNTI.

During this period, if the UE receives the PDCCH skipping indication from the network device, the UE may perform the following PDCCH monitoring operations.

1. During the PDCCH skipping duration after receiving the PDCCH skipping indication and during the RTT after sending the Msg1, the UE stops monitoring the PDCCH scrambled by the C-RNTI.

2. After receiving the PDCCH skipping indication and after the RTT which is after sending the Msg1, the LTE ignores the PDCCH skipping indication and starts to monitor the PDCCH scrambled by the C-RNTI.

The specific implementations of the Scenario 2 and the Scenario 3 can be illustrated with reference to a specific example in FIG. 7.

As illustrated in FIG. 7, the UE sends the Msg 1 or the MsgA at the time t1, and receives the PDCCH skipping indication from the network device at the time t2. In FIG. 7, the PDCCH skipping duration is the period between the time t2 and the time t3, and the RTT is the period between the time t1 and the time t4. Herein the time t4 is earlier than the time t3. In this case, since the response from the network cannot arrive earlier than the time t4, the UE may not monitor the PDCCH scrambled by the C-RNTI during the period between the time t2 and the time t4, and may monitor the PDCCH scrambled by the C-RNTI after the time t4.

Therefore, during the BFR procedure of the UE, if receiving the PDCCH skipping indication from the network device, the UE can control the PDCCH monitoring according to the PDCCH skipping duration and the RTT for the signal transmission between the UE and the network device, so as to give consideration to both receiving the response from the network and saving power for the UE.

Embodiment three

In the Embodiment three, the UE may perform uplink transmission through a CG resource (i.e. the UE performs CG transmission). For example, the UE sends the PUSCH through the CG resource, and the uplink transmission requires feedback from the network device. For example, the HARQ process corresponding to the CG resource is configured to activate the HARQ feedback, or the HARQ feedback of the HARQ process corresponding to the CG resources is not cancelled. In this case, the first information may include the PUSCH.

The uplink transmission performed by the UE on the CG resource is not scheduled by the network device. Therefore, the network device is not aware of the uplink transmission of the UE. After performing the uplink transmission, the UE may receive the PDCCH skipping indication from the network device.

In the Embodiment three, the UE may receive a DRX configuration from the network device. Alternatively, the DRX configuration can be configured through the RRC. The DRX configuration herein may include at least one of the DRX configurations described above, for example, the long DRX cycle, the drx-onDurationTimer, the drx-InactivityTimer, and the like.

The network device may also send CG resource configuration through the RRC.

As an example rather than a limitation, the CG resource configuration may include at least one of a Configured Scheduling RNTI (CS-RNTI) that is preconfigured, uplink HARQ processes reserved for the CG resources, a number of the uplink HARQ processes reserved for the CG resources, a cycle of the CG resources, a CG time domain resource, a CG frequency domain resource, and the like.

After sending the PUSCH on the CG resource, if the UE receives the PDCCH skipping indication from the network device, the UE can execute the following PDCCH monitoring operations.

1. During the PDCCH skipping duration after receiving the PDCCH skipping indication and during the RTT after the CG transmission, the UE stops monitoring the PDCCH(s).

2. After receiving the PDCCH skipping indication and after the RTT which is after the CG transmission, the LTE ignores the PDCCH skipping indication and starts to monitor the PDCCH(s).

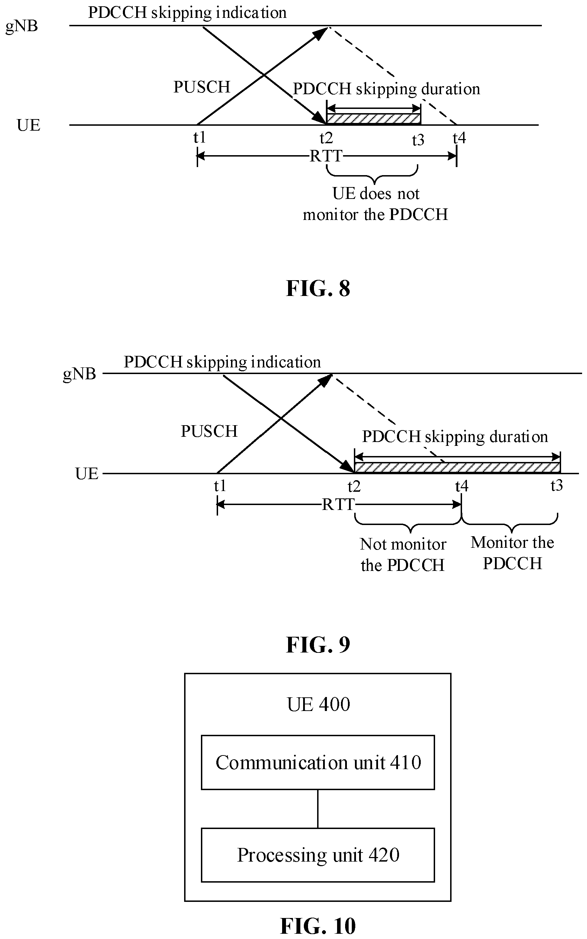

References to FIG. 8 and FIG. 9 are made for description.

As illustrated in FIG. 8, the UE sends a PUSCH on a CG resource at the time t1, and receives a PDCCH skipping indication from the network device at the time T2. In FIG. 8, the PDCCH skipping duration is the period between the time t2 and the time t3, and the RTT is the period between the time t1 and the time t4. Herein the time t4 is later than the time t3. In this case, the UE may not perform the PDCCH monitoring during the PDCCH skipping duration (i.e. during the period between the time t2 and the time t3), and monitor the PDCCH after the time t4.

Optionally, the PDCCH may or may not be monitored during the period between the time t3 and the time t4.

As illustrated in FIG. 9, the UE sends a PUSCH on a CG resource at the time t1, and receives a PDCCH skipping indication from the network device at the time T2. In FIG. 9, the PDCCH skipping duration is the period between the time t2 and the time t3, and the RTT is the period between the time t1 and the time t4. Herein the time t4 is earlier than the time t3. In this case, the UE may not perform the PDCCH monitoring during the period between the time t2 and the time t4, and monitor the PDCCH after the time t4.

Therefore, after the UE triggers the CG transmission, if receiving the PDCCH skipping indication from the network device, the UE can control the PDCCH monitoring according to the PDCCH skipping duration and the RTT for the signal transmission between the UE and the network device, so as to give consideration to both receiving the response from the network and saving power for the UE.

In view of the above embodiments, after the LTE triggers the uplink transmission, if receiving the PDCCH skipping indication from the network device, the UE can control the PDCCH monitoring according to the PDCCH skipping duration and the RTT for the signal transmission between the LTE and the network device, so as to give consideration to both receiving the response from the network and saving power for the UE.

The method embodiments of the present disclosure are described in detail above with reference to FIGS. 3 to 9, and device embodiments of the present disclosure are described in detail below with reference to FIGS. 10 to 12. It should be understood that the device embodiments and the method embodiments correspond to each other, and similar descriptions may refer to the method embodiments.

FIG. 10 is a block diagram of a user equipment 400 according to an embodiment of the present disclosure. As illustrated in FIG. 10, the UE 400 includes a communication unit 410 and a processing unit 420.

The communication unit 410 is configured to send first information to a network device.

The communication unit 410 is also configured to receive first indication information from the network device. Herein the first indication information is configured to indicate the UE to skip Physical Downlink Control Channel (PDCCH) monitoring.

The processing unit 420 is configured to determine whether to skip the PDCCH monitoring based on a first duration and a first Round Trip Time (RTT). Herein the first duration is a duration skipped by the UE for monitoring PDCCH, as indicated by the network device, and the first RTT is a RTT for signal transmission between the UE and the network device.

Optionally, in some embodiments, the processing unit 420 is specifically configured to determine to skip the PDCCH monitoring during the first duration after receiving the first indication information and during the first RTT after sending the first information, or determine not to skip the PDCCH monitoring after the first RTT which is after sending the first information.

Optionally, in some embodiments, the first information includes a Scheduling Request (SR), and the SR is in a pending state when the first indication information is received.

Optionally, in some embodiments, the first indication information is configured to indicate the first duration and/or a set of target serving cells in which skipping of the PDCCH monitoring is performed.

Optionally, in some embodiments, the communication unit 410 is further configured to skip monitoring PDCCHs in all serving cells when determining to skip the PDCCH monitoring, or skip monitoring PDCCHs in serving cells in the set of target serving cells when determining to skip the PDCCH monitoring, or not skip monitoring the PDCCHs in all the serving cells when determining not to skip the PDCCH monitoring, or not skip monitoring the PDCCHs in the serving cells in the set of target serving cells when determining not to skip the PDCCH monitoring.

Optionally, in some embodiments, the first information includes uplink information in a random access procedure, and the random access procedure is triggered by Beam Failure Recovery (BFR).

Optionally, in some embodiments, the first information includes a preamble sequence in a non-contention-based random access procedure, and the preamble sequence is a dedicated preamble sequence.

Optionally, in some embodiments, the communication unit 410 is further configured to monitor a PDCCH scrambled by a Cell Radio Network Temporary Identifier (C-RNTI) in a window for receiving a Random Access Response (RAR) when determining not to skip the PDCCH monitoring, or skip monitoring the PDCCH scrambled by the C-RNTI in the window for receiving the RAR when determining to skip the PDCCH monitoring.

Optionally, in some embodiments, the first information includes a message A in a contention-based 2-step random access procedure, and the message A (MsgA) includes a preamble sequence and Physical Uplink Shared Channel (PUSCH) carrying the C-RNTI.

Optionally, in some embodiments, the communication unit 410 is further configured to monitor a PDCCH scrambled by the C-RNTI and a PDCCH scrambled by a MsgB-RNTI in a window for receiving a message B (MsgB) when determining not to skip the PDCCH monitoring, or skip monitoring the PDCCH scrambled by the C-RNTI and the PDCCH scrambled by the MsgB-RNTI in the window for receiving the message B when determining to skip the PDCCH monitoring.

Optionally, in some embodiments, the first information includes a message 3 (Msg 3) in a contention-based 4-step random access procedure, and the message 3 includes a PUSCH carrying a Cell Radio Network Temporary Identifier (C-RNTI).

Optionally, in some embodiments, the communication unit 410 is further configured to monitor a PDCCH scrambled by the C-RNTI during operation of a random access contention resolution timer (ra-ContentionResolutionTimer) when determining not to skip the PDCCH monitoring, or skip monitoring the PDCCH scrambled by the C-RNTI during the operation of the ra-ContentionResolutionTimer when determining to skip the PDCCH monitoring.

Optionally, in some embodiments, the first information includes information transmitted on a Configured Grant (CG) resource, and a Hybrid Automatic Repeat Request (HARQ) process corresponding to the CG resource is configured to initiate HARQ feedback, or the HARQ feedback of the HARQ process corresponding to the CG resource is not cancelled.

Optionally, in some embodiments, the first RTT is determined according to position information and ephemeris information the UE. Alternatively, the first RTT is determined according to a Timing Advance (TA) indicated by the network device. Alternatively, the first RTT is determined according to a duration of a Discontinuous Reception uplink HARQ RTT timer (drx-HARQ-RTT-TimerUL) configured by the network device. Alternatively, the first RTT is determined according to the duration and an RTT offset of the drx-HARQ-RTT-TimerUL configured by the network device.

Optionally, in some embodiments, the first information is an uplink transmission initiated by the UE.

Optionally, in some embodiments, the network device is one in a Non-Terrestrial Networks (NTN).

Optionally, in some embodiments, the communication module mentioned above may be a communication interface or a transceiver, or may be an input-output interface of a communication chip or a system-on-chip. The determination module may be one or more processors.

It should be understood that the UE 400 according to the embodiments of the present disclosure may correspond to the UE in the method embodiments of the present disclosure. The above and other operations and/or functions of each unit in the UE 400 are intended to realize the corresponding flow of the UE in the method 200 illustrated in FIGS. 3 to 8, respectively, which is not repeated here for the sake of brevity.

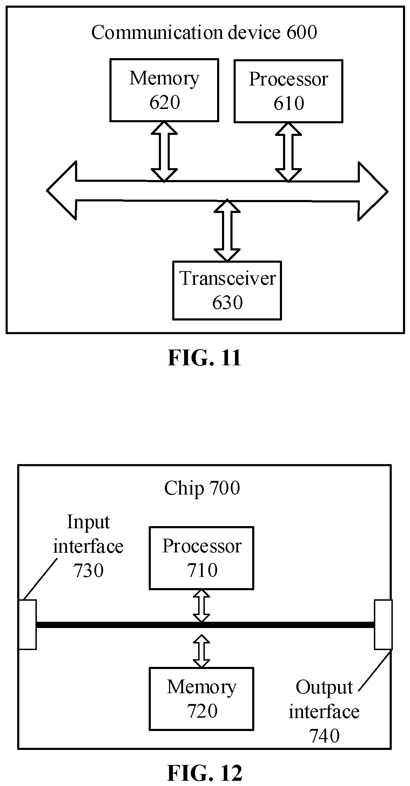

FIG. 11 is a block diagram of a communication device 600 according to an embodiment of the present disclosure. The communication device 600 illustrated in FIG. 11 includes a processor 610 that can call and execute a computer program from a memory to implement the method in the embodiments of the present disclosure.

Optionally, as illustrated in FIG. 11, the communication device 600 may further include a memory 620. Herein the processor 610 may call and execute a computer program from the memory 620 to implement the method in the embodiments of the present disclosure.

Herein the memory 620 may be a separate device independent of the processor 610, or may be integrated in the processor 610.

Optionally, as illustrated in FIG. 11, the communication device 600 may further include a transceiver 630. That processor 610 can control the transceiver 630 to communicate with other devices, in particular to send information or data to other devices, or to receive information or data from other devices.

Herein the transceiver 630 may include a transmitter and a receiver. The transceiver 630 may include one or more antennas.

Optionally, the communication device 600 may be the network device in the embodiments of the present disclosure, and the communication device 600 may implement the corresponding processes realized by the network device in the various methods of the embodiments of the present disclosure, which is not repeated here for the sake of brevity.

Optionally, the communication device 600 can be the mobile terminal/UE in the embodiments of the present disclosure, and the communication device 600 can implement the corresponding processes realized by the mobile terminal/UE in the various methods of the embodiments of the present disclosure, which is not repeated here for the sake of brevity

FIG. 12 is a block diagram of a chip according to an embodiment of the present disclosure. Chip 700 illustrated in FIG. 12 includes a processor 710 configured to call and execute a computer program from a memory, so as to implement the method in the embodiments of the present disclosure.

Optionally, as illustrated in FIG. 12, the chip 700 may further include a memory 720. Herein the processor 710 may call may a computer program from the memory 720 to implement the method in the embodiments of the present disclosure.

Herein the memory 720 may be a separate device independent of the processor 710, or may be integrated in the processor 710.

Optionally, the chip 700 may further include an input interface 730. The processor 710 may control the input interface 730 to communicate with other devices or chips, in particular to obtain information or data from other devices or chips.

Optionally, the chip 700 may further include an output interface 740. Herein the processor 710 may control the output interface 740 to communicate with other devices or chips, in particular to output information or data to other devices or chips.

Optionally, the chip can be applied to the network device in the embodiments of the present disclosure, and the chip can implement the corresponding processes realized by the network device in the various methods of the embodiments of the present disclosure, which is not repeated here for the sake of brevity.

Optionally, the chip can be applied to the mobile terminal/UE in the embodiments of the present disclosure, and the chip can implement the corresponding processes realized by the mobile terminal/UE in the various methods of the embodiments of the present disclosure, which is not repeated here for the sake of brevity.

It should be understood that each of the chips referred to in embodiments of the present disclosure may also be referred to as a system level chip, a system chip, a chip system or a system on chip, or the like.

It should be understood that the processor of the embodiments of the present disclosure may be an integrated circuit chip with signal processing capability. In the implementation process, each step of the above method embodiments can be accomplished by an integrated logic circuit of hardware or by an instruction in form of software in the processor. The processor described above may be a general purpose processor, a Digital Signal Processor (DSP), an Application Specific Integrated Circuit (ASIC), a Field Programmable Gate Array (FPGA), or other programmable logic device, discrete gate or transistor logic device, discrete hardware component. The processor may implement or perform the methods, steps, and logical block diagrams disclosed in the embodiments of the present disclosure. The general purpose processor may be a microprocessor or any conventional processor or the like. The steps of the method disclosed in the embodiments of the present disclosure can be directly accomplished by the hardware decoding processor, or be accomplished by the combination of hardware and software modules in the decoding processor. The software module may be located in a Random Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads the information in the memory to implement the steps of the foregoing methods in combination with the hardware.

It can be appreciated that the memory in embodiments of the present disclosure may be a volatile memory or a non-volatile memory, or may include both the volatile memory and the non-volatile memory. The nonvolatile memory may be a ROM, a PROM, an Erasable PROM (EPROM), an EEPROM, or a flash memory. The volatile memory may be a RAM that functions as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memory is an example but not a limiting description. For example, the memory in embodiments of the present disclosure may also be a SRAM, a DRAM, a SDRAM, a DDR SDRAM, an ESDRAM, a SLDRAM, a DR RAM, and the like. That is, the memories in the embodiments of the present disclosure are intended to include, but are not limited to, these and any other suitable types of memories.

Embodiments of the present disclosure also provide a computer-readable storage medium configured to store computer programs.

Optionally, the computer-readable storage medium can be applied to the network device in the embodiments of the present disclosure, and the computer programs enable the computer to implement the corresponding processes realized by the network device in the various methods of the embodiments of the present disclosure, which is not repeated here for the sake of brevity.

Optionally, the computer-readable storage medium can be applied to the mobile terminal/UE in the embodiments of the present disclosure, and the computer programs enable the computer to implement the corresponding processes realized by the mobile terminal/UE in the various methods of the embodiments of the present disclosure, which is not repeated here for the sake of brevity

Embodiments of the present disclosure also provide a computer program product including computer program instructions.

Optionally, the computer program product can be applied to the network device in the embodiments of the present disclosure, and the computer program instructions enable the computer to implement the corresponding processes realized by the network device in the various methods of the embodiments of the present disclosure, which is not repeated here for the sake of brevity.

Optionally, the computer program product can be applied to the mobile terminal/UE in the embodiments of the present disclosure, and the computer program instructions enable the computer to implement the corresponding processes realized by the mobile terminal/UE in the various methods of the embodiments of the present disclosure, which is not repeated here for the sake of brevity.

Embodiments of the present disclosure also provide a computer program including computer program instructions.

Optionally, the computer program can be applied to the network device in the embodiments of the present disclosure, and the computer program enables the computer to implement the corresponding processes realized by the network device in the various methods of the embodiments of the present disclosure, which is not repeated here for the sake of brevity.

Optionally, the computer program can be applied to the mobile terminal/UE in the embodiments of the present disclosure, and the computer program enables the computer to implement the corresponding processes realized by the mobile terminal/UE in the various methods of the embodiments of the present disclosure, which is not repeated here for the sake of brevity.

Those skilled in the art will appreciate that the various example units and algorithm steps described in connection with the embodiments disclosed herein can be implemented in electronic hardware or a combination of computer software and electronic hardware. Whether these functions are performed in hardware or software form depends on specific disclosures and design constraints of the technical scheme. Those skilled may use different methods for each specific disclosure to implement the described functions but such implementation should not be considered beyond the scope of the present disclosure.

Those skilled in the art will clearly appreciate that for convenience and conciseness of description, the specific operating processes of the above-mentioned systems, devices and units may refer to the corresponding processes in the aforementioned method embodiments and will not be repeated herein.

In the several embodiments provided herein it should be understood that the disclosed systems, devices and methods may be implemented in other ways. For example, the above-mentioned embodiments of the device are only schematic. For example, the division of the unit is only a logical functional division, and in practice, there may be another division manner. For example, multiple units or components may be combined or integrated into another system, or some features may be ignored or not performed. On the other hand, the coupling or direct coupling or communication connection between each other illustrated or discussed may be indirect coupling or communication connection through some interface, device or unit, and may be electrical, mechanical or other forms.

The units illustrated as separate elements may or may not be physically separated, and the elements displayed as units may or may not be physical units, i.e., they may be located in one place, or may be distributed over multiple network units. Some or all of the units may be selected according to actual needs to achieve the objectives of the embodiments of the present disclosure.

In addition, the functional units in various embodiments of the present disclosure may be integrated in one processing unit, or each unit may exist physically individually, or two or more units may be integrated in one unit.

The functions may be stored in a computer-readable storage medium if implemented in form of software functional units and sold or used as stand-alone products. Based on such an understanding, the essence of the technical solutions of the present disclosure, or the part that contributes to the related technologies, or part of the technical solutions can be embodied in the form of a software product stored in a storage medium including several instructions, which can be executed by a computer device (which may be a personal computer, a server, or a network device, etc.) to implement all or part of the operations of the method described in the various embodiments of the present disclosure. The foregoing storage medium includes a Universal Serial Bus (USB) flash drive, a removable hard disk, a Read-Only Memory (ROM), a Random Access Memory (RAM), a magnetic disk, an optical disk, or any other medium that can store program code.

The foregoing descriptions are merely specific embodiments of the present disclosure, but the scope of protection of the present disclosure is not limited thereto. Any change or replacement readily contemplated by a person skilled in the art within the technical scope disclosed in the present disclosure shall fall within the scope of protection of the present disclosure. Accordingly, the scope of protection of the present disclosure shall be subject to the scope of protection of the claims.

**Claims**

1. A method for wireless communication, comprising:

   sending, by a user equipment (UE), first information to a network device;
   receiving, by the UE, first indication information from the network device, wherein the first indication information is configured to indicate the UE to skip Physical Downlink Control Channel (PDCCH) monitoring; and
   determining, by the UE, whether to skip the PDCCH monitoring based on a first duration and a first Round Trip Time (RTT), wherein the first duration is a duration skipped by the LTE for monitoring PDCCH, and the first RTT is a RTT for signal transmission between the UE and the network device.

2. The method of claim 1, wherein determining, by the UE, whether to skip the PDCCH monitoring based on the first duration and the first RTT comprises:

   during the first duration after receiving the first indication information and during the first RTT after sending the first information, determining, by the UE, to skip the PDCCH monitoring; or
   after the first RTT which is after sending the first information, determining, by the UE, not to skip the PDCCH monitoring.

3. The method of claim 1, wherein the first information comprises a Scheduling Request (SR), and the SR is in a pending state when the first indication information is received.

4. The method of claim 3, wherein the first indication information is configured to indicate at least one of the first duration or a set of target serving cells in which skipping of the PDCCH monitoring is performed.

5. The method of claim 4, further comprising:

   when determining to skip the PDCCH monitoring, skipping, by the UE, monitoring PDCCHs in all serving cells;
   when determining to skip the PDCCH monitoring, skipping, by the UE, monitoring PDCCHs in serving cells in the set of target serving cells;
   when determining not to skip the PDCCH monitoring, not skipping, by the UE, monitoring the PDCCHs in all the serving cells; or
   when determining not to skip the PDCCH monitoring, not skipping, by the UE, monitoring the PDCCHs in the serving cells in the set of target serving cells.

6. The method of any one of claims 1 to 5, wherein the first information comprises uplink information in a random access procedure, and the random access procedure is triggered by Beam Failure Recovery (BFR).

7. The method of claim 6, wherein the first information comprises a preamble sequence in a non-contention-based random access procedure, and the preamble sequence is a dedicated preamble sequence.

8. The method of claim 7, further comprising:

   when determining not to skip the PDCCH monitoring, monitoring, by the UE, a PDCCH scrambled by a Cell Radio Network Temporary Identifier (C-RNTI) in a window for receiving a Random Access Response (RAR); or
   when determining to skip the PDCCH monitoring, skipping, by the LTE in the window for receiving the RAR, monitoring the PDCCH scrambled by the C-RNTI.

9. The method of claim 6, wherein the first information comprises a message A (MsgA) in a contention-based 2-step random access procedure, and the MsgA comprises a preamble sequence and a Physical Uplink Shared Channel (PUSCH) carrying a Cell Radio Network Temporary Identifier (C-RNTI).

**10.** The method of claim 9, further comprising:

when determining not to skip the PDCCH monitoring, monitoring, by the UE in a window for receiving a message B (MsgB), a PDCCH scrambled by the C-RNTI and a PDCCH scrambled by a MsgB-RNTI; or
when determining to skip the PDCCH monitoring, skipping, by the LTE in the window for receiving the MsgB, monitoring the PDCCH scrambled by the C-RNTI and the PDCCH scrambled by the MsgB-RNTI.

**11.** The method of claim 6, wherein the first information comprises a message 3 (Msg 3) in a contention-based 4-step random access procedure, and the Msg 3 comprises a PUSCH carrying a Cell Radio Network Temporary Identifier (C-RNTI).

**12.** The method of claim 11, further comprising:

when determining not to skip the PDCCH monitoring, monitoring, by the UE, during operation of a random access contention resolution timer (ra-ContentionResolutionTimer), a PDCCH scrambled by the C-RNTI; or
when determining to skip the PDCCH monitoring, skipping, by the UE, during the operation of the ra-ContentionResolutionTimer, monitoring the PDCCH scrambled by the C-RNTI.

**13.** The method of any one of claims 1 to 12, wherein the first information comprises information transmitted on a Configured Grant (CG) resource,
wherein a Hybrid Automatic Repeat Request (HARQ) process corresponding to the CG resource is configured to initiate HARQ feedback, or the HARQ feedback of the HARQ process corresponding to the CG resource is not cancelled.

**14.** The method of any one of claims 1 to 13, wherein the first RTT is determined according to position information and ephemeris information the UE, or

wherein the first RTT is determined according to a Timing Advance (TA) indicated by the network device, or
wherein the first RTT is determined according to a duration of a Discontinuous Reception uplink HARQ RTT timer (drx-HARQ-RTT-TimerUL) configured by the network device, or
wherein the first RTT is determined according to the duration and an RTT offset of the drx-HARQ-RTT-TimerUL configured by the network device.

**15.** The method of any one of claims 1 to 14, wherein the first information is an uplink transmission initiated by the UE.

**16.** The method of any one of claims 1 to 15, wherein the network device is one in a Non-Terrestrial Networks (NTN).

**17.** A user equipment (UE) , comprising:

a communication unit, configured to send first information to a network device and receive first indication information from the network device, wherein the first indication information is configured to indicate the UE to skip Physical Downlink Control Channel (PDCCH) monitoring; and
a processing unit, configured to determine whether to skip the PDCCH monitoring based on a first duration and a first Round Trip Time (RTT), wherein the first duration is a duration skipped by the LTE for monitoring PDCCH, and the first RTT is a RTT for signal transmission between the UE and the network device.

**18.** The LTE of claim 17, wherein the processing unit is configured to:

determine to skip the PDCCH monitoring during the first duration after receiving the first indication information and during the first RTT after sending the first information; or
determine not to skip the PDCCH monitoring after the first RTT which is after sending the first information.

**19.** The UE of claim 17 or 18, wherein the first information comprises a Scheduling Request (SR), and the SR is in a pending state when the first indication information is received.

**20.** The UE of claim 19, wherein the first indication information is configured to indicate at least one of the first duration or a set of target serving cells in which skipping of the PDCCH monitoring is performed.

21. The LTE of claim 20, wherein the communication unit is further configured to:

skip monitoring PDCCHs in all serving cells when determining to skip the PDCCH monitoring;
skip monitoring PDCCHs in serving cells in the set of target serving cells when determining to skip the PDCCH monitoring;
not skip monitoring the PDCCHs in all the serving cells when determining not to skip the PDCCH monitoring; or
not skip monitoring the PDCCHs in the serving cells in the set of target serving cells when determining not to skip the PDCCH monitoring.

22. The UE of any one of claims 17 to 21, wherein the first information comprises uplink information in a random access procedure, and the random access procedure is triggered by Beam Failure Recovery (BFR).

23. The UE of claim 22, wherein the first information comprises a preamble sequence in a non-contention-based random access procedure, and the preamble sequence is a dedicated preamble sequence.

24. The LTE of claim 23, wherein the communication unit is further configured to:

monitor a PDCCH scrambled by a Cell Radio Network Temporary Identifier (C-RNTI) in a window for receiving a Random Access Response (RAR) when determining not to skip the PDCCH monitoring; or
skip monitoring the PDCCH scrambled by the C-RNTI in the window for receiving the RAR when determining to skip the PDCCH monitoring.

25. The UE of claim 24, wherein the first information comprises a message A (MsgA) in a contention-based 2-step random access procedure, and the MsgA comprises a preamble sequence and a Physical Uplink Shared Channel (PUSCH) carrying the C-RNTI.

26. The LTE of claim 25, wherein the communication unit is further configured to:

monitor the PDCCH scrambled by the C-RNTI and a PDCCH scrambled by a MsgB-RNTI in a window for receiving a message B (MsgB) when determining not to skip the PDCCH monitoring; or
skip monitoring the PDCCH scrambled by the C-RNTI and the PDCCH scrambled by the MsgB-RNTI in the window for receiving the MsgB when determining to skip the PDCCH monitoring.

27. The UE of claim 22, wherein the first information comprises a message 3 (Msg 3) in a contention-based 4-step random access procedure, and the Msg 3 comprises a PUSCH carrying a Cell Radio Network Temporary Identifier (C-RNTI).

28. The UE of claim 27, wherein the communication unit is further configured to:

monitor a PDCCH scrambled by the C-RNTI during operation of a random access contention resolution timer (ra-ContentionResolutionTimer) when determining not to skip the PDCCH monitoring; or
skip monitoring the PDCCH scrambled by the C-RNTI during the operation of the ra-ContentionResolutionTimer when determining to skip the PDCCH monitoring.

29. The UE of any one of claims 17 to 28, wherein the first information comprises information transmitted on a Configured Grant (CG) resource,
wherein a Hybrid Automatic Repeat Request (HARQ) process corresponding to the CG resource is configured to initiate HARQ feedback, or the HARQ feedback of the HARQ process corresponding to the CG resource is not cancelled.

30. The UE of any one of claims 17 to 29, wherein the first RTT is determined according to position information and ephemeris information the UE, or

wherein the first RTT is determined according to a Timing Advance (TA) indicated by the network device, or
wherein the first RTT is determined according to a duration of a Discontinuous Reception uplink HARQ RTT timer (drx-HARQ-RTT-TimerUL) configured by the network device, or
wherein the first RTT is determined according to the duration and an RTT offset of the drx-HARQ-RTT-TimerUL configured by the network device.

31. The UE of any one of claims 17 to 30, wherein the first information is an uplink transmission initiated by the UE.

32. The UE according to any one of claims 17-31, wherein the network device is one in a Non-Terrestrial Networks (NTN).

33. A user equipment (UE) comprising a processor and a memory being configured to store a computer program, wherein the processor is configured to call and execute the computer programs stored in the memory to implement the method of any one of claims 1 to 16.

34. A chip comprising a processor, wherein the processor is configured to call a computer program from a memory for execution, so as to enable a device installed with the chip to implement the method of any one of claims 1 to 16.

35. A computer-readable storage medium configured to store computer programs that enable a computer to implement the method of any one of claims 1 to 16.

36. A computer program product comprising computer program instructions that enable a computer to implement the method of any one of claims 1 to 16.

37. A computer program, configured to enable a computer to implement the method of any one of claims 1 to 16.

**100**

**FIG. 1**

**FIG. 2**

200

| UE | | Network device |

S210 : A UE sends first information to a network device

S220: The UE receives first indication information from the network device. The first indication information is configured to indicate the UE to skip PDCCH monitoring

S230:The UE determines whether to skip the PDCCH monitoring based on a first duration and a first RTT

**FIG. 3**

gNB

PDCCH skipping indication

SR

PDCCH skipping duration

UE

t1          t2          t3    t4

RTT

UE does not monitor the PDCCH

**FIG. 4**

FIG. 5

FIG. 6

FIG. 7

gNB

PDCCH skipping indication

PUSCH    PDCCH skipping duration

UE

t1    t2    t3  t4

RTT

UE does not
monitor the PDCCH

## FIG. 8

gNB

PDCCH skipping indication

PUSCH    PDCCH skipping duration

UE

t1    t2    t4    t3

RTT

Not monitor    Monitor the
the PDCCH    PDCCH

## FIG. 9

UE 400

Communication unit 410

Processing unit 420

## FIG. 10

Communication device 600

Memory 620

Processor 610

Transceiver 630

**FIG. 11**

Chip 700

Input interface 730

Processor 710

Memory 720

Output interface 740

**FIG. 12**

# INTERNATIONAL SEARCH REPORT

| International application No. |
|---|
| **PCT/CN2020/097135** |

**A.    CLASSIFICATION OF SUBJECT MATTER**

H04W 52/02(2009.01)i;  H04W 72/04(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 终端, 网络设备, 跳过, 监听, 侦听, 检测, 物理下行控制信道, 时长, 往返传输时间, 发送, 接收, 调度请求, 未决, 挂起, 随机接入, 波束失败恢复, UE, network, skip, monitor, listen, PDCCH, duration, RTT, transmit, receive, SR, schedule request, pending, RACH, BFR, GTS, go-to-sleep

**C.    DOCUMENTS CONSIDERED TO BE RELEVANT**

| Category* | Citation of document, with indication, where appropriate, of the relevant passages | Relevant to claim No. |
|---|---|---|
| X | CATT. "Report on [105bis#27][NR/Power Saving] – PDCCH Skipping" *3GPP TSG-RAN WG2 Meeting #106 R2-1905665,* 03 May 2019 (2019-05-03), pp. 17-20 | 1-37 |
| A | CN 111294898 A (SPREADTRUM COMMUNICATIONS SHANGHAI INC.) 16 June 2020 (2020-06-16) entire document | 1-37 |
| A | WO 2019182428 A1 (SAMSUNG ELECTRONICS CO., LTD.) 26 September 2019 (2019-09-26) entire document | 1-37 |
| A | US 2019313383 A1 (INTEL CORP.) 10 October 2019 (2019-10-10) entire document | 1-37 |
| A | SAMSUNG. "Discussion on Proposals to Enhance DRX" *3GPP TSG-RAN WG2 Meeting #79bis R2-124694,* 28 September 2012 (2012-09-28), entire document | 1-37 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2021** | **10 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/097135**

| Patent document cited in search report | | | Publication date (day/month/year) | Patent family member(s) | | | Publication date (day/month/year) |
|---|---|---|---|---|---|---|---|
| CN | 111294898 | A | 16 June 2020 | None | | | |
| WO | 2019182428 | A1 | 26 September 2019 | US | 10652826 | B2 | 12 May 2020 |
| | | | | US | 2019297577 | A1 | 26 September 2019 |
| | | | | IN | 202047041113 | A | 23 October 2020 |
| | | | | KR | 2020124719 | A | 03 November 2020 |
| | | | | EP | 3744130 | A1 | 02 December 2020 |
| US | 2019313383 | A1 | 10 October 2019 | None | | | |

Form PCT/ISA/210 (patent family annex) (January 2015)